# EUROPÄISCHE PATENTSCHRIFT

(11) **EP 3 759 002 B1**
(45) Veröffentlichungstag und Bekanntmachung des Hinweises auf die Patenterteilung: **03.05.2023**
(21) Anmeldenummer: 19701456.6
(22) Anmeldetag: 12.01.2019
(51) Int. Cl.: B60W 50/00, B60W 50/08, B60W 50/10, B60W 50/12, B60W 50/14, B60K 28/06, G05D 1/00

(54) **VERFAHREN UND VORRICHTUNG ZUR STEUERUNG EINER UMSCHALTUNG ZWISCHEN EINEM AUTOMATISCHEN FAHRBETRIEB UND EINEM MANUELLEN FAHRBETRIEB EINES FAHRZEUGS**
METHOD AND DEVICE FOR CONTROLLING THE SWITCHOVER BETWEEN AN AUTOMATIC DRIVING MODE AND A MANUAL DRIVING MODE OF A VEHICLE
PROCÉDÉ ET DISPOSITIF SERVANT À COMMANDER UNE COMMUTATION ENTRE UN MODE DE DÉPLACEMENT AUTOMATIQUE ET UN MODE DE DÉPLACEMENT MANUEL D'UN VÉHICULE

(30) Priorität: 01.03.2018 DE 102018203056
(43) Veröffentlichungstag der Anmeldung: 06.01.2021
(73) Patentinhaber: Robert Bosch GmbH, 70442 Stuttgart (DE)
(72) Erfinder: VOGEL, Andreas, 31139 Hildesheim (DE)
(86) Internationale Anmeldenummer: PCT/EP2019/050721
(87) Internationale Veröffentlichungsnummer: WO 2019/166145

(56) Entgegenhaltungen:
- EP-A1- 2 253 499
- EP-A2- 2 979 914
- EP-B1- 2 253 499
- DE-A1-102012 112 802
- DE-A1-102013 019 424
- DE-A1-102016 202 590
- US-A1- 2017 261 981

## Beschreibung

### Stand der Technik

Die Erfindung betrifft ein Verfahren zur Steuerung einer Umschaltung zwischen einem automatischen Fahrbetrieb und einem manuellen Fahrbetrieb eines Fahrzeugs. Weiterhin betrifft die Erfindung auch eine Recheneinheit zur Durchführung des Verfahrens und ein Fahrzeug mit der erfindungsgemäßen Vorrichtung.

Aus dem Dokument DE 10 2012 112 802 A1 ist eine Umschaltung von einem automatischen Fahrbetrieb in einen manuellen Fahrbetrieb in Abhängigkeit der aktuellen Umfeldsituation bekannt. Bevor der Fahrer hierbei die manuelle Steuerung wieder übernehmen muss, wird ein Warnsignal erzeugt. Der Zeitabstand zwischen Warnsignal und benötigtem Fahrereingriff wird hierbei in Abhängigkeit der erfassten Fahreraufmerksamkeit eingestellt.

Weiterhin beschreiben die Dokumente EP 2 979 914 A2, EP 2 253 499 A1, US 2017/261981 A1, DE 10 2016 202590 A1 und DE 10 2013 019424 A1 Verfahren zur Steuerung einer Umschaltung zwischen einem automatischen Fahrbetrieb und einem manuellen Fahrbetrieb eines Fahrzeugs, welche zumindest Teile des Oberbegriffs des Anspruchs 1 aufweisen.

Bei der Umschaltung in den manuellen Fahrbetrieb des Fahrzeugs besteht jedoch besonders im Falle erhöhter Müdigkeit des Fahrers das Risiko, dass der Fahrer aktuell überhaupt nicht in der Lage ist, das Fahrzeug manuell zu steuern. In diesem beispielhaften Fall kann die Umschaltung so zu einem Unfall führen.

Der Erfindung liegt daher die Aufgabe zugrunde, ein Verfahren zu entwickeln, welches sicherstellt, dass der Fahrer bei einer Umschaltung in den manuellen Fahrbetrieb überhaupt aktuell in der Lage ist, das Fahrzeug manuell zu steuern.

### Offenbarung der Erfindung

Zur Lösung der Aufgabe wird ein Verfahren gemäß des unabhängigen Anspruchs 1 vorgeschlagen. Außerdem werden eine Recheneinheit zur Ausführung des erfindungsgemäßen Verfahrens und ein Fahrzeug mit der erfindungsgemäßen Recheneinheit vorgeschlagen.

In einem ersten Schritt des Verfahrens zur Steuerung einer Umschaltung zwischen einem automatischen Fahrbetrieb und einem manuellen Fahrbetrieb des Fahrzeugs wird zunächst in dem automatischen Fahrbetrieb des Fahrzeugs ein Signal zur Umschaltung in den manuellen Fahrbetrieb erfasst. Dieses Signal kann beispielsweise auf einen Wunsch des Fahrers zur Umschaltung in den manuellen Fahrbetrieb hindeuten. Das Signal zur Umschaltung kann in diesem Zusammenhang beispielsweise als Lenkeingriff, Pedalbetätigung oder als Betätigung eines sonstigen im Fahrzeug angeordneten Schalters ausgebildet sein. Alternativ kann das Signal auch auf ein automatisch erzeugtes Signal zur Umschaltung in den manuellen Fahrbetrieb hindeuten. Wird ein solches Signal erfasst, so wird im folgenden Verfahrensschritt der manuelle Fahrbetrieb des Fahrzeugs eingeleitet. Im nun folgenden manuellen Fahrbetrieb wird fortlaufend eine optimale Trajektorie des Fahrzeugs ermittelt. Die optimale Trajektorie kennzeichnet beispielsweise den optimalen Bewegungspfad des Fahrzeugs unter Berücksichtigung der Umfeldsituation, wie auch der aktuell erfassten Betriebsgrößen des Fahrzeugs. Beispiele für die Betriebsgrößen des Fahrzeugs sind die aktuelle Geschwindigkeit und/oder die aktuelle Beschleunigung und/oder die aktuelle Drehrate und/oder der aktuelle Lenkwinkel des Fahrzeugs. Außerdem wird im manuellen Fahrbetrieb fortlaufend eine manuell befahrene Trajektorie des Fahrzeugs ermittelt. Diese manuell befahrene Trajektorie kennzeichnet beispielsweise den aktuellen Bewegungspfad des Fahrzeugs unter Berücksichtigung der aktuell erfassten Betriebsgrößen des Fahrzeugs. Im folgenden Verfahrensschritt wird dann die ermittelte, manuell befahrene Trajektorie mit der ermittelten, optimalen Trajektorie fortlaufend verglichen und hierbei geprüft, ob eine Abweichung zwischen den beiden Trajektorien ermittelt werden kann. Es wird entsprechend im manuellen Fahrbetrieb des Fahrzeugs ein Beobachtungsstatus eingeleitet, welche den Fahrer während der manuellen Steuerung beobachtet. In Abhängigkeit der ermittelten Abweichung wird in einem letzten Verfahrensschritt wieder in den automatischen Fahrbetrieb umgeschaltet oder der Beobachtungsstatus beendet, indem das fortlaufende Ermitteln der manuell befahrenen Trajektorie und das fortlaufende Ermitteln der optimalen Trajektorie im manuellen Fahrbetrieb beendet wird.

Vorzugsweise wird weiterhin ein Umfeld des Fahrzeugs in Abhängigkeit der Umschaltung in den manuellen Fahrbetrieb des Fahrzeugs erfasst. Daraufhin wird in Abhängigkeit des erfassten Umfelds des Fahrzeugs fortlaufend ein Sicherheitsbereich der ermittelten optimalen Trajektorie des Fahrzeugs im manuellen Fahrbetrieb ermittelt. Innerhalb dieses Sicherheitsbereich hat die manuell befahrene Trajektorie bevorzugt gewisse Bedingungen zu erfüllen, damit es zu keiner sicherheitskritischen Situation kommt. So umfasst der Sicherheitsbereich beispielsweise in der Vogelperspektive einen rechten und linken Sicherheitsbereich, der durch die manuell befahrene Trajektorie nicht überschritten werden darf. Auch dürfen beispielsweise definierte Obergrenzen und Untergrenzen für die Geschwindigkeit und/oder für die Beschleunigung und/oder für die Drehrate und/oder für den Lenkwinkel durch die manuell befahrene Trajektorie nicht überschritten bzw. unterschritten werden. Bei dem Sicherheitsbereich kann es sich vorzugsweise um einen Bewegungsschlauch oder Fahrschlauch des Fahrzeugs handeln, welcher die ermittelte, optimale Trajektorie umgibt. Der Bewegungsschlauch begrenzt hierbei die optimale Trajektorie mit beispielsweise einem rechten und linken Sicherheitsbereich und auch beispielsweise mit einem vorderen und hinteren Sicherheitsbereich von allen Seiten. Der Sicherheitsbereich des Fahrzeugs wird folgend mit der ermittelten, manuell befahrenen Trajektorie verglichen. Wird hierbei eine Überschreitung des Sicherheitsbereichs festgestellt, so wird in den automatischen Fahrbetrieb umgeschaltet und das Fahrzeug wieder automatisch in den Sicherheitsbereich gesteuert. Beispielsweise kann somit in Zusammenhang mit dem Bewegungsschlauch und dem dort vorhandenen vorderen und hinteren Sicherheitsbereich ein plötzliches, unbegründetes Abbremsen des Fahrzeugs verhindert werden. Wird jedoch keine Überschreitung des Sicherheitsbereichs durch die ermittelte manuell befahrene Trajektorie festgestellt, werden das fortlaufende Ermitteln der manuell befahrenen Trajektorie und das fortlaufende Ermitteln der optimalen Trajektorie im manuellen Fahrbetrieb beendet. Vorzugsweise wird der Sicherheitsbereich in Abhängigkeit weiterer Verkehrsteilnehmer ermittelt. Wird beispielsweise ein entgegenkommendes Fahrzeug erkannt, so kann im Zusammenhang mit dem Bewegungsschlauch des Fahrzeugs und dem dort vorhandenen linken und rechten Sicherheitsbereich, der linke Sicherheitsbereich enger gefasst werden, sodass das Fahrzeug im manuellen Fahrbetrieb nicht droht, auf die Gegenfahrbahn zu geraten. Der linke oder rechte Sicherheitsbereich kann alternativ oder zusätzlich auch in Abhängigkeit eines erfassten Fahrbahnrands ermittelt werden, sodass das Fahrzeug im manuellen Fahrbetrieb nicht droht, von der Fahrbahn abzukommen.

Erfindungsgemäß werden das fortlaufende Ermitteln der manuell befahrenen Trajektorie und das fortlaufende Ermitteln der optimalen Trajektorie des Fahrzeugs in dem manuellen Fahrbetrieb beendet, falls die ermittelte Abweichung unterhalb eines definierten Schwellenwerts verbleibt. Somit wird gewährleistet, dass die Beobachtung der Fähigkeit des Fahrers zum manuellen Steuern des Fahrers beendet wird, falls festgestellt wird, dass der Fahrer derart gesteuert hat, dass die festgestellte Abweichung unterhalb eines definierten Schwellenwerts verbleibt. Andersherum wird ebenfalls gewährleistet, dass wieder auf den automatischen Fahrbetrieb umgeschaltet wird, falls festgestellt wird, dass der Fahrer derart fehlerhaft steuert, dass der definierte Schwellenwert durch die ermittelte Abweichung überschritten wird. Vorzugsweise werden weiterhin das fortlaufende Ermitteln der manuell befahrenen Trajektorie und das fortlaufende Ermitteln der optimalen Trajektorie beendet, falls die ermittelte Abweichung zusätzlich für eine definierte Zeitdauer unterhalb des definierten Schwellenwerts verbleibt. Somit wird gewährleistet, dass die Beobachtung der Fähigkeit des Fahrers zum manuellen Steuern des Fahrers beendet wird, falls festgestellt wird, dass der Fahrer für eine gewisse Zeit das Fahrzeug derart gesteuert hat, dass die festgestellte Abweichung unterhalb eines definierten Schwellenwerts verbleibt. Andersherum wird ebenfalls gewährleistet, dass wieder auf den automatischen Fahrbetrieb umgeschaltet wird, falls festgestellt wird, dass der Fahrer derart fehlerhaft steuert, dass innerhalb der definierten Zeitdauer der definierte Schwellenwert durch die ermittelte Abweichung überschritten wird. Vorzugsweise werden der definierte Schwellenwert und/oder die definierte Zeitdauer in Abhängigkeit des fortlaufenden Ermittelns einer Fahrsituation des Fahrzeugs angepasst. Die Fahrsituation selbst wird in Abhängigkeit der manuell befahrenen Trajektorie des Fahrzeugs ermittelt. So kann beispielsweise der Fahrer für ein Fahrmanöver, welches eine hohe Fähigkeit der manuellen Steuerung des Fahrzeugs bedarf, belohnt werden, falls hierbei eine vergleichsweise kleine Abweichung der manuellen von der optimalen Trajektorie ermittelt wird. Beispiele für ein solches Fahrmanöver sind eine Kurvenfahrt oder eine Fahrt auf einem Waldweg. In diesem Fall kann der definierte Schwellenwert erhöht werden oder die definierte Zeitdauer verringert werden. Bevorzugt werden die definierte Zeitdauer und/oder der definierte Schwellenwert dem Fahrer des Fahrzeugs in dem manuellen Fahrbetrieb angezeigt. Somit kann der Fahrer wahrnehmen, wann die Beobachtung seiner Fähigkeit zur manuellen Steuerung des Fahrzeugs beendet wird oder falls ein definierter Schwellenwert angezeigt wird, wie der derzeitige Stand der ermittelten Abweichung gegenüber dem definierten Schwellenwert ist.

Weiterhin vorzugsweise werden die definierte Zeitdauer und/oder der definierte Schwellenwert in Abhängigkeit eines in dem automatischen Fahrbetrieb des Fahrzeugs erfassten Zustands des Fahrers angepasst. Der Zustand des Fahrers, welcher beispielsweise den körperlichen Zustand des Fahrers darstellt, wird entsprechend während des automatischen Fahrbetriebs beobachtet und bei der Umschaltung in den manuellen Fahrbetrieb berücksichtigt, indem die definierte Zeitdauer und/oder der definierte Schwellenwert abhängig von dem Fahrerzustand angepasst wird. Ein Beispiel für solch eine Beobachtung des körperlichen Zustands des Fahrers ist die Erfassung des Blutdrucks und/oder der Herzfrequenz des Fahrers während des automatischen Fahrbetriebs. Somit kann beispielsweise eine Situation berücksichtigt werden, bei der der Fahrer im automatischen Fahrbetrieb schon stark ermüdet ist und seine Fähigkeit zur manuellen Steuerung des Fahrzeugs entsprechend bei der Umschaltung in den manuellen Fahrbetrieb stärker beobachtet werden muss. Der definierte Schwellenwert würde in diesem Fall beispielsweise verringert und/oder die definierte Zeitdauer verlängert werden.

Erfindungsgemäß wird der zuvor beschriebene definierte Schwellenwert in einen ersten und einen zweiten definierten Schwellenwert unterteilt. Der erste definierte Schwellenwert ist hierbei kleiner als der zweite definierte Schwellenwert. Der zweite Schwellenwert kann hierbei beispielsweise auch der Größe des definierten Schwellenwerts entsprechen. Die ermittelte Abweichung der manuellen Trajektorie von der optimalen Trajektorie wird hierbei zunächst mit dem ersten definierten Schwellenwert verglichen. Falls hierbei festgestellt wird, dass die Abweichung den ersten definierten Schwellenwert unterschreitet, werden das fortlaufende Ermitteln der manuell befahrenen Trajektorie und das fortlaufende Ermitteln der optimalen Trajektorie des Fahrzeugs im manuellen Fahrbetrieb beendet. Der Fahrer hat in diesem Fall seine Fähigkeit zum manuellen Steuern des Fahrzeugs bewiesen. Hierbei kann optional zusätzlich die Bedingung mit berücksichtigt werden, dass das Ermitteln der optimalen und der manuellen Trajektorie nur beendet wird, falls die Abweichung für eine definierte Zeitdauer den ersten definierten Schwellenwert nicht überschreitet. Falls jedoch festgestellt wird, dass die ermittelte Abweichung den definierten ersten Schwellenwert überschreitet, so wird folgend die ermittelte Abweichung mit dem zweiten definierten Schwellenwert verglichen. Falls hierbei festgestellt wird, dass der zweite definierte Schwellenwert von der ermittelten Abweichung überschritten wird, so wird in den automatischen Fahrbetrieb umgeschaltet. Der Fahrer hat hierbei also nicht gezeigt, dass er derzeit in der Lage ist, das Fahrzeug manuell zu steuern. Falls jedoch festgestellt wird, dass der zweite Schwellenwert nicht durch die ermittelte Abweichung überschritten wird, so wird der Vergleich der ermittelten, manuell befahrenen Trajektorie des Fahrzeugs mit der ermittelten, optimalen Trajektorie wiederholt. Durch die Verwendung des ersten und des zweiten definierten Schwellenwerts wird es entsprechend ermöglicht, die Fähigkeiten des Fahrers zum manuellen Steuern des Fahrzeugs noch besser einzuschätzen und im Verfahren zu berücksichtigen.

Ein weiterer Gegenstand der Erfindung ist eine Recheneinheit, welche dazu ausgebildet ist, das oben beschriebene Verfahren auszuführen. Außerdem ist ein Fahrzeug Teil der Erfindung, welches die erfindungsgemäße Recheneinheit und wenigstens eine Signaleinheit aufweist. Die wenigstens eine Signaleinheit ist in diesem Zusammenhang dazu ausgebildet, ein Signal zur Umschaltung in den manuellen Fahrbetrieb des Fahrzeugs zu erzeugen. Die Signaleinheit kann hierbei das Signal beispielsweise bei einer Gefahrensituation automatisch erzeugen. Alternativ ist die Signaleinheit als Eingabeeinheit ausgebildet, welche zur Eingabe eines Signals zur Umschaltung in den manuellen Fahrbetrieb ausgebildet ist. In diesem Fall kann der Fahrer selbst den Zeitpunkt der Umschaltung wählen. Vorzugsweise weist das Fahrzeug weiterhin wenigstens einen ersten Sensor auf, welcher zur Erfassung von Umfelddaten des Fahrzeugs in Abhängigkeit der Umschaltung in den manuellen Fahrbetrieb des Fahrzeugs ausgebildet ist. Bei dem wenigstens einen Sensor kann es sich beispielsweise um einen Umfeldsensor handeln. Weiterhin vorzugsweise weist das Fahrzeug wenigstens einen zweiten Sensor auf, der zur Erfassung eines Zustands des Fahrers des Fahrzeugs, insbesondere eines erfassten körperlichen Zustands des Fahrers, ausgebildet ist. Das Fahrzeug weist weiterhin eine optionale Kommunikationseinheit auf, welche dazu ausgebildet ist, Umfelddaten von einem Server oder von anderen Verkehrsteilnehmern zu erfassen.

### Beschreibung der Zeichnungen

Figur 1 zeigt schematisch eine Ausführungsform der erfindungsgemäßen Recheneinheit, welche zur Steuerung einer Umschaltung zwischen einem automatischen Fahrbetrieb und einem manuellen Fahrbetrieb eines Fahrzeugs ausgebildet ist.
Figur 2a zeigt in Form eines Ablaufdiagramms eine erste Ausführungsform eines beispielhaften Verfahrens, das außerhalb des Schutzumfangs der Ansprüche liegt.
Figur 2b zeigt in Form eines Ablaufdiagramms eine zweite Ausführungsform des erfindungsgemäßen Verfahrens zur Steuerung einer Umschaltung zwischen einem automatischen Fahrbetrieb und einem manuellen Fahrbetrieb eines Fahrzeugs.
Figur 3 zeigt schematisch in der Vogelperspektive ein erfindungsgemäßes Fahrzeug, welches sich im manuellen Fahrbetrieb befindet und dessen manuell befahrene Trajektorie mit der optimalen Trajektorie des Fahrzeugs verglichen wird.

### Ausführungsbeispiele

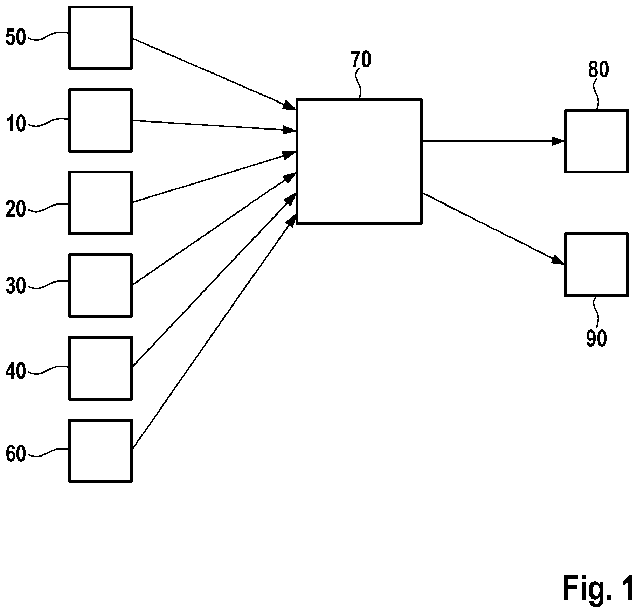

Figur 1 zeigt eine Ausführungsform einer erfindungsgemäßen Recheneinheit 70.

Die Recheneinheit 70 ist hierbei dazu ausgebildet, in einem automatischen Fahrbetrieb des Fahrzeugs ein Signal zur Umschaltung in den manuellen Fahrbetrieb des Fahrzeugs von einer Signaleinheit 10 zu empfangen. Zusätzlich ist die Recheneinheit 70 dazu ausgebildet, den manuellen Fahrbetrieb des Fahrzeugs einzuleiten, falls ein Signal zur Umschaltung in den manuellen Fahrbetrieb des Fahrzeugs von der Signaleinheit 10 empfangen wird. Die Recheneinheit 70 dient außerdem dazu, im manuellen Fahrbetrieb des Fahrzeugs fortlaufend eine optimale Trajektorie des Fahrzeugs, welches sich im manuellen Fahrbetrieb befindet, zu ermitteln. Außerdem ermittelt die Recheneinheit 70 fortlaufend eine manuell befahrene Trajektorie des Fahrzeugs. Die Recheneinheit 70 ist dazu ausgebildet, fortlaufend die ermittelte, manuell befahrene Trajektorie des Fahrzeugs mit der ermittelten, optimalen Trajektorie zu vergleichen und bei dem durchgeführten Vergleich eine Abweichung der ermittelten, manuell befahrenen Trajektorie des Fahrzeugs von der ermittelten, optimalen Trajektorie zu ermitteln. Darüber hinaus ist die Recheneinheit 70 dazu ausgebildet, in Abhängigkeit der ermittelten Abweichung in den automatischen Fahrbetrieb des Fahrzeugs umzuschalten oder das fortlaufende Ermitteln der manuell befahrenen Trajektorie und das fortlaufende Ermitteln der optimalen Trajektorie des Fahrzeugs im manuellen Fahrbetrieb zu beenden. Im Falle des Umschaltens in den automatischen Fahrbetrieb des Fahrzeugs ist die Recheneinheit 70 beispielsweise dazu ausgebildet, einen Längs- und/oder Querantrieb 80 des Fahrzeugs anzusteuern.

Optional ist die Recheneinheit 70 dazu ausgebildet, Umfelddaten des Fahrzeugs von wenigstens einem ersten Sensor 20 zu empfangen. Bei dem wenigstens einen ersten Sensor 20 kann es sich beispielsweise um einen Umfeldsensor handeln. Alternativ oder zusätzlich ist die Recheneinheit 70 in diesem Zusammenhang dazu ausgebildet Umfelddaten des Fahrzeugs von wenigstens einem Server 30 zu empfangen. Bei diesem Server 30 kann es sich beispielsweise um einen Server handeln, welcher Umfelddaten von weiteren Verkehrsteilnehmern über eine Car-to-X Kommunikationsverbindung erhält. Die Recheneinheit 70 ist weiterhin optional dazu ausgebildet, fortlaufend einen Sicherheitsbereichs der ermittelten optimalen Trajektorie des Fahrzeugs im manuellen Fahrbetrieb in Abhängigkeit der erfassten Umfelddaten des Fahrzeugs zu ermitteln. Außerdem ist die Recheneinheit 70 dazu ausgebildet, fortlaufend die ermittelte Abweichung der manuell befahrenen Trajektorie von der ermittelten, optimalen Trajektorie mit dem ermittelten Sicherheitsbereich der ermittelten optimalen Trajektorie des Fahrzeugs zu vergleichen. In Abhängigkeit des Vergleichs der ermittelten Abweichung mit dem ermittelten Sicherheitsbereich ist die Recheneinheit 70 zusätzlich dazu ausgebildet, in den automatischen Fahrbetrieb des Fahrzeugs umzuschalten oder das fortlaufende Ermitteln der manuell befahrenen Trajektorie und das fortlaufende Ermitteln der optimalen Trajektorie des Fahrzeugs im manuellen Fahrbetrieb zu beenden. Im Falle des Umschaltens in den automatischen Fahrbetrieb des Fahrzeugs ist die Recheneinheit 70 beispielsweise dazu ausgebildet, einen Längs- und/oder Querantrieb 80 des Fahrzeugs anzusteuern.

Im Zusammenhang mit dem ermittelten Sicherheitsbereich ist die Recheneinheit 70 optional dazu ausgebildet, den Sicherheitsbereich in Abhängigkeit weiterer Verkehrsteilnehmer im Umfeld des Fahrzeugs und/oder in Abhängigkeit einer erfassten Fahrbahnbegrenzung zu ermitteln. Hierfür kann die Recheneinheit 70 beispielsweise Umfelddaten von dem wenigstens einen ersten Sensor 20 oder dem Server 30 empfangen. Alternativ kann die aktuelle Position des Fahrzeugs, welche beispielsweise mittels GNSS-Empfänger bestimmt wird, mit den Navigationsdaten, welche von einer Navigationseinrichtung 40 empfangen werden, abgeglichen werden.

Optional ist die Recheneinheit 70 dazu ausgebildet, das fortlaufende Ermitteln der manuell befahrenen Trajektorie und das fortlaufende Ermitteln der optimalen Trajektorie des Fahrzeugs in dem manuellen Fahrbetrieb zu beenden, falls die ermittelte Abweichung für eine definierte Zeitdauer unterhalb eines definierten Schwellenwerts verbleibt. Die Recheneinheit 70 kann in diesem Zusammenhang dazu ausgebildet sein, eine Anzeigeeinheit 90 anzusteuern, um dem Fahrer des Fahrzeugs die definierte Zeitdauer und/oder den definierten Schwellenwert anzuzeigen. In diesem Zusammenhang kann die Recheneinheit 70 dazu ausgebildet sein, die Zeit, welche beispielsweise seit Beginn des Umschaltens in den manuellen Fahrbetrieb des Fahrzeugs erfasst wird, von einer Uhr 50 zu empfangen und die erfasste Zeit mit der definierten Zeitdauer zu vergleichen. Optional ist die Recheneinheit 70 in diesem Zusammenhang weiterhin dazu ausgebildet, Zustandsdaten des Fahrers während des automatischen Fahrbetriebs von wenigstens einem zweiten Sensor 60 zu empfangen. Bei dem Zustand des Fahrers handelt es sich insbesondere um den körperlichen Zustand des Fahrers. Bei dem wenigstens einen zweiten Sensor kann es sich beispielsweise um einen Sensor handeln, welcher den Fitnesszustand des Fahrers ermittelt. Beispielsweise kann es sich hierbei um ein Blutdruckmessgerät, Lidschlagdetektor oder eines Sensors zur Erfassung der Herzfrequenz des Fahrers handeln.

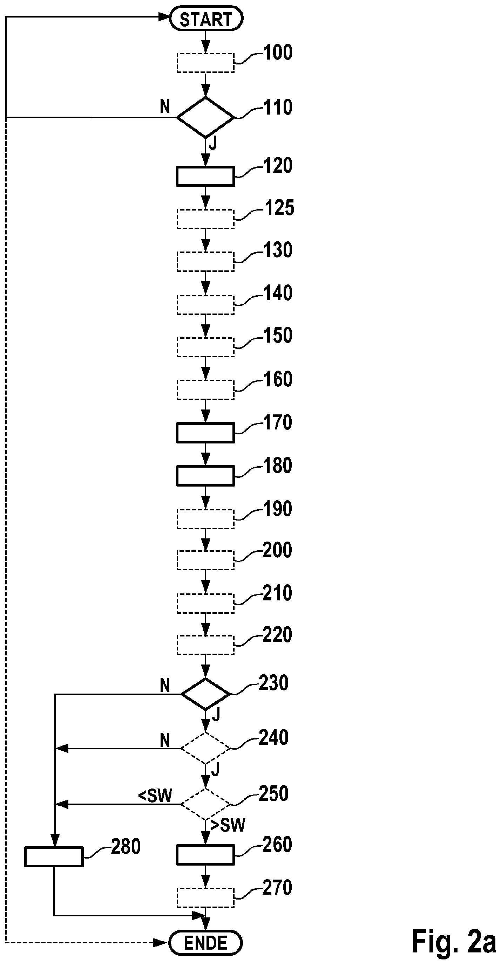

Figur 2a zeigt eine Ausführungsform eines eines beispielhaften Verfahrens, das außerhalb des Schutzumfangs der Ansprüche liegt.

Die zuvor beschriebene Recheneinheit 70 ist hierbei dazu ausgebildet, dieses Verfahren auszuführen.

Hierbei wird zunächst in einem Verfahrensschritt 110 geprüft, ob ein Signal zur Umschaltung in den manuellen Fahrbetrieb des Fahrzeugs erfasst wird. Wird hierbei kein solches Signal erfasst, so wird das Verfahren beendet oder alternativ von vorne gestartet. Wird jedoch ein Signal zur Umschaltung in den manuellen Fahrbetrieb des Fahrzeugs erfasst, so wird in einem folgenden Verfahrensschritt 120 der manuelle Fahrbetrieb des Fahrzeugs eingeleitet. In einem folgenden Verfahrensschritt 170 wird fortlaufend in dem nun manuellen Fahrbetrieb des Fahrzeugs eine optimale Trajektorie des Fahrzeugs ermittelt. Zusätzlich wird in einem Verfahrensschritt 180 fortlaufend eine manuell befahrene Trajektorie des Fahrzeugs ermittelt. In einem folgenden Verfahrensschritt 230 wird die ermittelte, optimale Trajektorie mit der ermittelten, manuell befahrenen Trajektorie des Fahrzeugs fortlaufend verglichen. Wird bei diesem fortlaufenden Vergleich festgestellt, dass hierbei keine oder nur eine im Vergleich zu einem definierten Schwellenwert geringfügige Abweichung vorliegt, so kann auf einen Fahrer zurückgeschlossen werden, der in der Lage ist, das Fahrzeug manuell zu steuern. Entsprechend wird in diesem Fall in einem folgenden Verfahrensschritt 280 das fortlaufende Ermitteln der manuell befahrenen Trajektorie und das fortlaufende Ermitteln der optimalen Trajektorie des Fahrzeugs im manuellen Fahrbetrieb beendet. Wird jedoch in Verfahrensschritt 230 eine im Vergleich zu einem definierten Schwellenwert hohe Abweichung festgestellt, so wird in Verfahrensschritt 260 in einen automatischen Fahrbetrieb des Fahrzeugs umgeschaltet. Nach Ausführung einer der beiden Alternativen wird das Verfahren daraufhin beendet.

Optional kann das Fahrzeug auch in einem auf den Verfahrensschritt 260 folgenden Verfahrensschritt 270 in einen sicheren Zustand gebracht werden. Hierzu kann das Fahrzeug beispielsweise automatisch abgebremst und optional zum Stillstand gebracht werden.

Optional wird in einem Verfahrensschritt 130 während des manuellen Fahrbetriebs ein Umfeld des Fahrzeugs erfasst. In einem folgenden Verfahrensschritt 200 wird dann ein Sicherheitsbereich der ermittelten optimalen Trajektorie des Fahrzeugs ermittelt. In einem folgenden Verfahrensschritt 240 wird die ermittelte, manuell befahrene Trajektorie mit dem ermittelten Sicherheitsbereich der optimalen Trajektorie verglichen. Wird hierbei festgestellt, dass die manuell befahrene Trajektorie den Sicherheitsbereich nicht überschreitet, so wird in dem Verfahrensschritt 280 das fortlaufende Ermitteln der manuell befahrenen Trajektorie und das fortlaufende Ermittelns der optimalen Trajektorie des Fahrzeugs im manuellen Fahrbetrieb beendet. Wird jedoch festgestellt, dass die manuell befahrene Trajektorie den linken oder rechten Sicherheitsbereich überschreitet, so wird in Verfahrensschritt 260 in den automatischen Fahrbetrieb des Fahrzeugs umgeschaltet und das Fahrzeug automatisch wieder zurück in den Sicherheitsbereich gesteuert. Der Sicherheitsbereich wird beispielsweise in Abhängigkeit weiterer Verkehrsteilnehmer im Umfeld des Fahrzeugs ermittelt. Wird in diesem Zusammenhang beispielsweise ein entgegenkommendes Fahrzeug ermittelt, so wird ein linker Sicherheitsbereich eines als Bewegungsschlauch des Fahrzeugs ausgebildeter Sicherheitsbereich enger gefasst. Alternativ oder zusätzlich kann in diesem Zusammenhang der linke oder rechte Sicherheitsbereich auch in Abhängigkeit einer erfassten Fahrbahnbegrenzung ermittelt werden. Die Fahrbahnbegrenzung kann beispielsweise der Fahrbahnrand oder auch die Fahrbahnmarkierung auf der Straße darstellen. Solch eine Fahrbahnbegrenzung sollte während der Fahrt nicht überschritten werden. Die nötigen Umfelddaten für beide Möglichkeiten können insbesondere durch die Umfelderfassung in Verfahrensschritt 130 oder auch mittels eines Servers durch eine Car-to-X Kommunikation in einem Verfahrensschritt 140 erfasst werden. Auch kann die aktuelle Position des Fahrzeugs, welche beispielsweise mittels GNSS-Empfänger bestimmt wird, mit den Navigationsdaten, welche von einer Navigationseinrichtung 40 empfangen werden, abgeglichen werden. Die Navigationseinheit kann in diesem Fall die nötigen Umfelddaten bereitstellen.

Optional wird in einem Verfahrensschritt 200 ein definierter Schwellenwert und/oder eine definierte Zeitdauer ermittelt, welche im folgenden Verfahrensschritt 250 mit der ermittelten Abweichung der manuell befahrenen Trajektorie von der optimalen Trajektorie des Fahrzeugs verglichen werden. Wird hierbei festgestellt, dass der Schwellenwert nicht überschritten wird und die definierte Zeitdauer überschritten wird, so wird auf einen Fahrer zurückgeschlossen, der in der Lage ist, das Fahrzeug manuell zu steuern und es wird mit Verfahrensschritt 280 fortgesetzt. Wird jedoch hierbei festgestellt, dass der definierte Schwellenwert innerhalb der definierten Zeitdauer überschritten wird, so wird auf einen Fahrer geschlossen, der zumindest derzeit nicht in der Lage ist, das Fahrzeug manuell zu steuern und es wird mit Verfahrensschritt 270 fortgesetzt. Optional kann in diesem Zusammenhang in einem Verfahrensschritt 190 eine Fahrsituation des Fahrzeugs in dem manuellen Fahrbetrieb ermittelt werden. Wird beispielsweise festgestellt, dass der Fahrer eine Kurve manuell gefahren ist ohne von der optimalen Trajektorie abzuweichen, so kann der definierte Schwellenwert und/oder die definierte Zeitdauer in Verfahrensschritt 200 verringert werden. Der Fahrer wird also für sein erfolgreiches Fahrmanöver mit einer Erhöhung des Schwellenwerts und/oder einer Verringerung der definierten Zeitdauer belohnt. Anders herum kann der Schwellenwert verringert und/oder die definierte Zeitdauer erhöht werden, falls festgestellt wird, dass sich das Fahrzeug ständig nur geradeaus bewegt. In diesem Fall hat der Fahrer noch nicht wirklich gezeigt, dass er fähig ist, das Fahrzeug manuell zu steuern. Weiterhin optional können dem Fahrer des Fahrzeugs die definierte Zeitdauer und/oder der definierte Schwellenwert während des manuellen Fahrbetriebs in einem Verfahrensschritt 220 angezeigt werden. Weiterhin optional wird in einem Verfahrensschritt 160 während des automatischen Fahrbetriebs ein Zustand des Fahrers erfasst. Der Zustand kann hierbei beispielsweise der körperliche Zustand des Fahrers sein. Der definierte Schwellenwert und/oder die definierte Zeitdauer kann in Verfahrensschritt 200 auch abhängig von dem erfassten Zustand des Fahrers eingestellt werden.

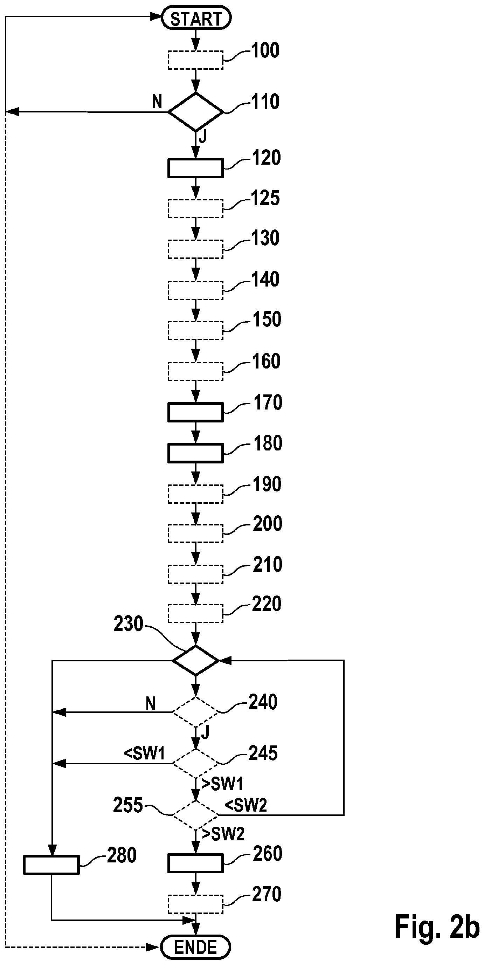

Figur 2b zeigt im Unterschied zu der ersten Ausführungsform des Verfahrens in Figur 2a, einen Verfahrensschritt 245, bei dem die ermittelte Abweichung der manuellen Trajektorie von der optimalen Trajektorie mit einem ersten definierten Schwellenwert verglichen wird. Falls hierbei festgestellt wird, dass die Abweichung den ersten definierten Schwellenwert unterschreitet, so wird mit Verfahrensschritte 280 fortgefahren. Hierbei kann optional zusätzlich die Bedingung mit berücksichtigt werden, dass mit Verfahrensschritt 280 nur fortgefahren wird, falls die Abweichung für eine definierte Zeitdauer den ersten definierten Schwellenwert nicht überschreitet. Falls jedoch festgestellt wird, dass die Abweichung den definierten ersten Schwellenwert überschreitet, so wird mit Verfahrensschritt 255 fortgefahren. In Verfahrensschritt 255 wird die ermittelte Abweichung mit einem zweiten definierten Schwellenwert verglichen. Der zweite definierte Schwellenwert ist hierbei größer als der erste definierte Schwellenwert. Falls hierbei festgestellt wird, dass der zweite definierte Schwellenwert von der ermittelten Abweichung überschritten wird, so wird mit Verfahrensschritt 260 fortgefahren und in den automatischen Fahrbetrieb umgeschaltet. Falls festgestellt wird, dass der zweite Schwellenwert nicht durch die ermittelte Abweichung überschritten wird, so wird mit Verfahrensschritt 230 wiederholt fortgefahren.

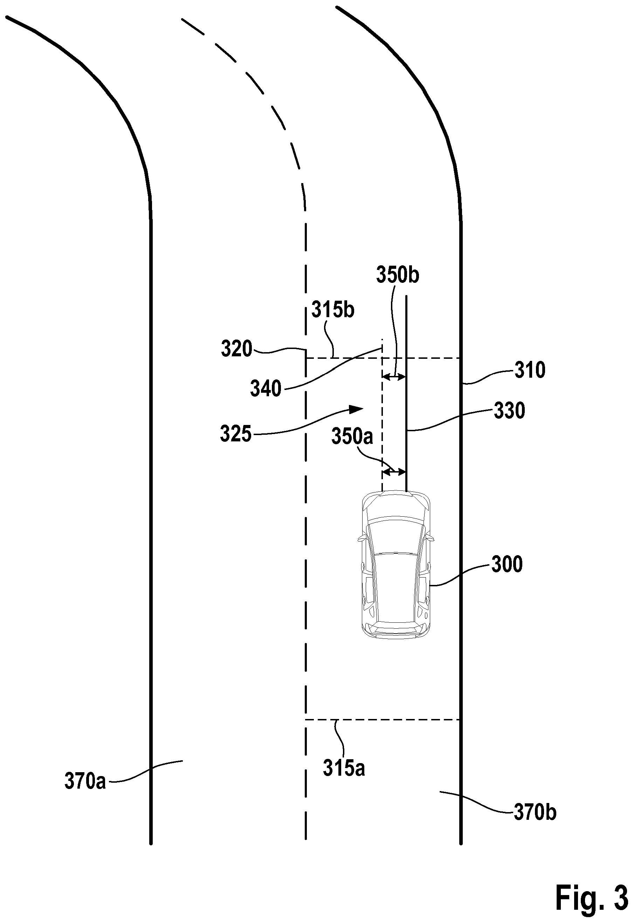

Figur 3 zeigt in der Vogelperspektive ein Fahrzeug, welches die zuvor in Figur 1 gezeigten Komponenten aufweist. Diese Komponenten, wie z.B. die Recheneinheit 70 sind in dieser Darstellung nicht dargestellt. Das Fahrzeug 300 befindet sich hierbei auf einer zweispurigen Fahrbahn, wobei die Fahrspuren 370a und 370b über einen Mittelstreifen 320 getrennt sind. Die linke Fahrspur 370a ist hierbei für den Gegenverkehr vorgesehen.

Es wird hierbei eine Situation aus der Vogelperspektive dargestellt, in welcher sich das Fahrzeug 300 in dem manuellen Fahrbetrieb befindet, da zuvor ein Signal zur Umschaltung in den manuellen Fahrbetrieb erfasst wurde. Im manuellen Fahrbetrieb wird nun fortlaufend eine manuell befahrene Trajektorie 330 ermittelt. Außerdem wird fortlaufend eine optimale Trajektorie 340 ermittelt. Die manuell befahrene Trajektorie 330 wird nun fortlaufend mit der optimalen Trajektorie verglichen und eine Abweichung ermittelt. Eine Abweichung kann hierbei beispielsweise ermittelt werden, indem in der Vogelperspektive Positionsabweichungen 350a und 350b der manuellen von der optimalen Trajektorie ermittelt werden. Diese Abweichungen 350a und 350b können sich über den Trajektorienverlauf hinweg in ihrer Größe voneinanderunterscheiden. Wird hierbei beispielsweise die ermittelte Abweichung 350a oder 350bzu groß, so wird das Fahrzeug 300 wieder in den automatischen Fahrbetrieb umgeschaltet. Die Abweichungen 350a oder 350bkönnen beispielsweise auch aufsummiert werden. Wird die Summe hierbei zu groß, so wird das Fahrzeug 300 in den automatischen Fahrbetrieb umgeschaltet.

Zum anderen wird in dieser Darstellung ein Sicherheitsbereich der ermittelten optimalen Trajektorie in Form eines Bewegungsschlauchs 325 fortlaufend ermittelt. Der Bewegungsschlauch 325 umgibt hierbei die optimale Trajektorie 340 von allen Seiten und wird in Abhängigkeit des Fahrzeugumfelds ermittelt. Der Sicherheitsbereich in Form des Bewegungsschlauchs 325 weist hierbei einen linken Sicherheitsbereich 320 auf, welcher als der Mittelstreifen 320 der Fahrbahn ausgebildet ist, da das Fahrzeug 300 bei Überschreitung des Mittelstreifens 320 in den Gegenverkehr geraten würde. Außerdem weist der Bewegungsschlauch 325 einen rechten Sicherheitsbereich 310 auf, welcher hierbei als der Fahrbahnrand ausgebildet. Bei Überschreitung des linken 320 oder rechten 310 Sicherheitsbereichs durch die manuell befahrene Trajektorie 330 kann beispielsweise in den automatischen Fahrbetrieb des Fahrzeugs 300 umgeschaltet werden und das Fahrzeug 300 automatisch zurück auf die Fahrspur 370b gesteuert. Der Bewegungsschlauch 325, welcher sich fortlaufend mit dem Fahrzeug 300 mitbewegt, weist weiterhin auch einen vorderen Sicherheitsbereich 315b und einen hinteren Sicherheitsbereich 315a auf. Der vordere 315b und hintere 315a Sicherheitsbereich kennzeichnen hierbei einen Bereich, der sich dynamisch während der Fahrt des Fahrzeugs 300 mitbewegt und eine Grenze für das Fahrzeug hinsichtlich dessen Geschwindigkeit oder Beschleunigung darstellt. Fährt das Fahrzeug 300 zu schnell oder beschleunigt zu stark, überschreitet es den vorderen Sicherheitsbereich 315b. Anders herum unterschreitet das Fahrzeug 300 den hinteren Sicherheitsbereich 315a, falls das Fahrzeug 300 plötzlich und unbegründet abbremst. In beiden Situationen kann in den automatischen Fahrbetrieb des Fahrzeugs 300 umgeschaltet werden, um das Fahrzeug 300 wieder zurück in den Sicherheitsbereich zu führen.

## Patentansprüche

1. Verfahren zur Steuerung einer Umschaltung zwischen einem automatischen Fahrbetrieb und einem manuellen Fahrbetrieb eines Fahrzeugs (300), wobei das Verfahren die folgenden Verfahrensschritte aufweist:
- im automatischen Fahrbetrieb des Fahrzeugs (300), Erfassen (110) eines Signals zur Umschaltung in den manuellen Fahrbetrieb des Fahrzeugs (300), und
- Einleiten (120) des manuellen Fahrbetriebs in Abhängigkeit des erfassten Signals zur Umschaltung in den manuellen Fahrbetrieb des Fahrzeugs (300), und
- Im manuellen Fahrbetrieb des Fahrzeugs, fortlaufendes Ermitteln (170) einer optimalen Trajektorie (340) des Fahrzeugs (300) in Abhängigkeit der Umschaltung in den manuellen Fahrbetrieb des Fahrzeugs (300), und
- Im manuellen Fahrbetrieb des Fahrzeugs (300), fortlaufendes Ermitteln (180) einer manuell befahrenen Trajektorie (330) des Fahrzeugs, und
- Fortlaufendes Vergleichen (230) der ermittelten, manuell befahrenen Trajektorie (330) des Fahrzeugs (300) mit der ermittelten, optimalen Trajektorie (340) und
- Fortlaufendes Ermitteln einer Abweichung (350a, 350b) der ermittelten, manuell befahrenen Trajektorie (330) von der ermittelten, optimalen Trajektorie (340) in Abhängigkeit des durchgeführten Vergleichs der ermittelten, manuell befahrenen Trajektorie (330) des Fahrzeugs mit der ermittelten, optimalen Trajektorie (340), und
- Umschalten (260) in den automatischen Fahrbetrieb des Fahrzeugs (300) oder
- Beenden (280) des fortlaufenden Ermittelns der manuell befahrenen Trajektorie (330) und des fortlaufenden Ermittelns der optimalen Trajektorie (340) des Fahrzeugs (300) im manuellen Fahrbetrieb in Abhängigkeit der ermittelten Abweichung (350a, 350b),
wobei das fortlaufende Ermitteln der manuell befahrenen Trajektorie und das fortlaufende Ermitteln der optimalen Trajektorie des Fahrzeugs (300) in dem manuellen Fahrbetrieb beendet (280) wird, falls die ermittelte Abweichung (350a, 350b) unterhalb eines definierten Schwellenwerts (250) verbleibt,
**dadurch gekennzeichnet, dass** der definierte Schwellenwert (250) in einen ersten definierten Schwellenwert (245) und einen zweiten definierten Schwellenwert (255) unterteilt wird, wobei der zweite definierte Schwellenwert (255) größer ist als der erste definierte Schwellenwert (245), wobei in Abhängigkeit eines Vergleichs der ermittelte Abweichung (350a, 350b) mit dem ersten definierten Schwellenwert (245) und dem zweiten definierten Schwellenwert (245)
- in den automatischen Fahrbetrieb des Fahrzeugs umgeschaltet (260) wird oder
- das fortlaufende Ermitteln der manuell befahrenen Trajektorie (330) und das fortlaufenden Ermittelns der optimalen Trajektorie (340) des Fahrzeugs (300) im manuellen Fahrbetrieb beendet (260) wird oder
- das fortlaufende Ermitteln der manuell befahrenen Trajektorie (330) und das fortlaufende Ermitteln der optimalen Trajektorie (340) des Fahrzeugs (300) im manuellen Fahrbetrieb fortgesetzt wird.

2. Verfahren nach Anspruch 1, **dadurch gekennzeichnet, dass** das Verfahren die folgenden zusätzlichen Verfahrensschritte aufweist:
- Erfassen (130) eines Umfelds des Fahrzeugs (300) in Abhängigkeit der Umschaltung in den manuellen Fahrbetrieb des Fahrzeugs (300), und
- Fortlaufendes Ermitteln (200) eines Sicherheitsbereichs der ermittelten optimalen Trajektorie (340) des Fahrzeugs (300) im manuellen Fahrbetrieb in Abhängigkeit des erfassten Umfelds des Fahrzeugs, und
- Fortlaufendes Vergleichen (240) der ermittelten, manuell befahrenen Trajektorie (330) mit dem ermittelten Sicherheitsbereich der ermittelten optimalen Trajektorie (340) des Fahrzeugs (300), und
- Umschalten (260) in den automatischen Fahrbetrieb des Fahrzeugs (300)oder
- Beenden (280) des fortlaufenden Ermittelns (180) der manuell befahrenen Trajektorie (330) und des fortlaufenden Ermittelns (170) der optimalen Trajektorie (340) des Fahrzeugs (300) im manuellen Fahrbetrieb zusätzlich in Abhängigkeit des Vergleichs (240) der manuell befahrenen Trajektorie (330) mit dem ermittelten Sicherheitsbereich.

3. Verfahren nach Anspruch 2, **dadurch gekennzeichnet, dass** der Sicherheitsbereich in Abhängigkeit weiterer Verkehrsteilnehmer im Umfeld des Fahrzeugs (300) und/oder in Abhängigkeit einer erfassten Fahrbahnbegrenzung (310) ermittelt werden.

4. Verfahren nach einem der Ansprüche 2 oder 3, **dadurch gekennzeichnet, dass** es sich bei dem Sicherheitsbereich um einen Bewegungsschlauch (325) des Fahrzeugs (300) handelt, wobei der Bewegungsschlauch (325) die ermittelte, optimale Trajektorie (340) umgibt.

5. Verfahren nach Anspruch 1, **dadurch gekennzeichnet, dass** das fortlaufende Ermitteln der manuell befahrenen Trajektorie und das fortlaufende Ermitteln der optimalen Trajektorie des Fahrzeugs (300) in dem manuellen Fahrbetrieb beendet wird, falls die ermittelte Abweichung (350a, 350b) zusätzlich für eine definierte Zeitdauer unterhalb des definierten Schwellenwerts (250) verbleibt.

6. Verfahren nach Anspruch 5, **dadurch gekennzeichnet, dass** der definierte Schwellenwert (250) und/oder die definierte Zeitdauer in Abhängigkeit des folgenden Verfahrensschritts angepasst wird:
- Fortlaufendes Ermitteln (190) einer Fahrsituation des Fahrzeugs (300) in dem manuellen Fahrbetrieb in Abhängigkeit der manuell befahrenen Trajektorie (330) des Fahrzeugs (300).

7. Verfahren nach einem der Ansprüche 5 oder 6, wobei die definierte Zeitdauer und/oder der definierte Schwellenwert (250) dem Fahrer des Fahrzeugs (300) in dem manuellen Fahrbetrieb angezeigt werden.

8. Verfahren nach einem der Ansprüche 5 bis 7, **dadurch gekennzeichnet, dass** die definierte Zeitdauer und/oder der definierte Schwellenwert (250) in Abhängigkeit eines in dem automatischen Fahrbetrieb des Fahrzeugs (300) erfassten (160) Zustands des Fahrers, insbesondere eines erfassten körperlichen Zustands des Fahrers, angepasst wird.

9. Recheneinheit (70), ausgebildet zur Ausführung eines Verfahrens nach einem der Ansprüche 1 bis 8, wobei die Recheneinheit (70) dazu ausgebildet ist,
- in einem automatischen Fahrbetrieb des Fahrzeugs (300), ein Signal zur Umschaltung in den manuellen Fahrbetrieb des Fahrzeugs (300) zu empfangen, und
- in Abhängigkeit des empfangenen Signals zur Umschaltung in den manuellen Fahrbetrieb des Fahrzeugs (300) den manuellen Fahrbetrieb einzuleiten, und
- im manuellen Fahrbetrieb des Fahrzeugs (300) in Abhängigkeit der Umschaltung in den manuellen Fahrbetrieb des Fahrzeugs (300) fortlaufend eine optimale Trajektorie (340) des Fahrzeugs (300) zu ermitteln, und
- im manuellen Fahrbetrieb des Fahrzeugs (300) fortlaufend eine manuell befahrene Trajektorie (330) des Fahrzeugs (340) zu ermitteln, und
- fortlaufend die ermittelte, manuell befahrene Trajektorie (330) des Fahrzeugs (340) mit der ermittelten, optimalen Trajektorie (340) zu vergleichen, und
- in Abhängigkeit des durchgeführten Vergleichs der ermittelten, manuell befahrenen Trajektorie (330) des Fahrzeugs (300) mit der ermittelten, optimalen Trajektorie (340) fortlaufend eine Abweichung (350a, 350b) der ermittelten, manuell befahrenen Trajektorie (330) von der ermittelten, optimalen Trajektorie (340) zu ermitteln, und
in Abhängigkeit der ermittelten Abweichung (350a, 350b)
- in den automatischen Fahrbetrieb des Fahrzeugs (300) umzuschalten oder
- das fortlaufende Ermitteln der manuell befahrenen Trajektorie (330) und das fortlaufende Ermitteln der optimalen Trajektorie (340) des Fahrzeugs (300) im manuellen Fahrbetrieb zu beenden,
wobei die Recheneinheit dazu ausgebildet ist, das fortlaufende Ermitteln der manuell befahrenen Trajektorie und das fortlaufende Ermitteln der optimalen Trajektorie des Fahrzeugs (300) in dem manuellen Fahrbetrieb zu beenden (280), falls die ermittelte Abweichung (350a, 350b) unterhalb eines definierten Schwellenwerts (250) verbleibt,
**dadurch gekennzeichnet, dass**
der definierte Schwellenwert (250) in einen ersten definierten Schwellenwert (245) und einen zweiten definierten Schwellenwert (255) unterteilt ist, wobei der zweite definierte Schwellenwert (255) größer ist als der erste definierte Schwellenwert (245), wobei die Recheneinheit dazu ausgebildet ist, in Abhängigkeit eines Vergleichs der ermittelten Abweichung (350a, 350b) mit dem ersten definierten Schwellenwert (245) und dem zweiten definierten Schwellenwert (245)
- in den automatischen Fahrbetrieb des Fahrzeugs umzuschalten (260) oder
- das fortlaufende Ermitteln der manuell befahrenen Trajektorie (330) und das fortlaufenden Ermittelns der optimalen Trajektorie (340) des Fahrzeugs (300) im manuellen Fahrbetrieb zu beenden (260) oder
- das fortlaufende Ermitteln der manuell befahrenen Trajektorie (330) und das fortlaufende Ermitteln der optimalen Trajektorie (340) des Fahrzeugs (300) im manuellen Fahrbetrieb fortzusetzen.

10. Recheneinheit (70) nach Anspruch 9, **dadurch gekennzeichnet, dass** die Recheneinheit (70) zusätzlich dazu ausgebildet ist,
- Umfelddaten des Fahrzeugs (300) in Abhängigkeit der Umschaltung in den manuellen Fahrbetrieb des Fahrzeugs (300) zu empfangen, und
- fortlaufend einen Sicherheitsbereich der ermittelten optimalen Trajektorie (340) des Fahrzeugs (300) im manuellen Fahrbetrieb in Abhängigkeit der erfassten Umfelddaten des Fahrzeugs (300) zu ermitteln, und
- fortlaufend die ermittelte Abweichung (350a, 350b) der ermittelten, manuell befahrenen Trajektorie (330) von der ermittelten, optimalen Trajektorie (340) mit dem ermittelten Sicherheitsbereich der ermittelten optimalen Trajektorie (340) des Fahrzeugs (300) zu vergleichen, und zusätzlich zum Vergleich mit den definierten Schwellenwerten
in Abhängigkeit des Vergleichs der ermittelten Abweichung (350a, 350b) der ermittelten, manuell befahrenen Trajektorie (330) von der ermittelten, optimalen Trajektorie (340) mit dem ermittelten Sicherheitsbereich
- in den automatischen Fahrbetrieb des Fahrzeugs (300) umzuschalten oder
- das fortlaufende Ermitteln der manuell befahrenen Trajektorie (330) und das fortlaufende Ermitteln der optimalen Trajektorie (340) des Fahrzeugs (300) im manuellen Fahrbetrieb zu beenden.

11. Fahrzeug (300) mit
- einer Recheneinheit (70) nach Anspruch 9 oder 10, und
- wenigstens eine Signaleinheit (10), ausgebildet zur Erzeugung eines Signals zur Umschaltung in einen manuellen Fahrbetrieb des Fahrzeugs (300).

12. Fahrzeug (300) nach Anspruch 11, wenn Anspruch 11 von Anspruch 9 abhängt, zusätzlich aufweisend
- wenigstens einen ersten Sensor (20), ausgebildet zur Erfassung von Umfelddaten des Fahrzeugs (300) in Abhängigkeit der Umschaltung in den manuellen Fahrbetrieb des Fahrzeugs (300),
wobei die Recheneinheit (70) dazu ausgebildet ist, die mittels des wenigstens einen ersten Sensors (20) erfassten Umfelddaten zu empfangen und in Abhängigkeit der empfangenen Umfelddaten des Fahrzeugs (300) fortlaufend einen Sicherheitsbereich der ermittelten optimalen Trajektorie (340) des Fahrzeugs (300) im manuellen Fahrbetrieb zu ermitteln, und fortlaufend die ermittelte Abweichung (350a, 350b) der ermittelten, manuell befahrenen Trajektorie (330) von der ermittelten, optimalen Trajektorie (340) mit einem ermittelten rechten (310) und linken (320) Sicherheitsbereich der ermittelten optimalen Trajektorie (340) des Fahrzeugs (300) zu vergleichen, und zusätzlich zum Vergleich mit den definierten Schwellenwerten in Abhängigkeit des Vergleichs der ermittelten Abweichung (350a, 350b) der ermittelten, manuell befahrenen Trajektorie (330) von der ermittelten, optimalen Trajektorie (340) mit dem ermittelten Sicherheitsbereich
- in den automatischen Fahrbetrieb des Fahrzeugs (300) umzuschalten oder
- das fortlaufende Ermitteln der manuell befahrenen Trajektorie (330) und das fortlaufende Ermitteln der optimalen Trajektorie (340) des Fahrzeugs (300) im manuellen Fahrbetrieb zu beenden.

13. Fahrzeug (300) nach einem der Ansprüche 11 oder 12, zusätzlich aufweisend
- wenigstens einen zweiten Sensor (60), ausgebildet zur Erfassung eines Zustands des Fahrers des Fahrzeugs (300), insbesondere eines erfassten körperlichen Zustands des Fahrers,
wobei die Recheneinheit (70) dazu ausgebildet ist, das fortlaufende Ermitteln der manuell befahrenen Trajektorie (330) und das fortlaufende Ermitteln der optimalen Trajektorie (340) des Fahrzeugs (300) in dem manuellen Fahrbetrieb zu beenden, falls die ermittelte Abweichung (350a, 350b) für eine definierte Zeitdauer unterhalb eines definierten Schwellenwerts (250) verbleibt, und die definierte Zeitdauer und/oder den definierten Schwellenwert (250) in Abhängigkeit des mittels des wenigstens einen zweiten Sensors (60) erfassten Zustands des Fahrers, insbesondere eines erfassten körperlichen Zustands des Fahrers, anzupassen.

## Claims

1. Method for controlling a switchover between an automatic driving mode and a manual driving mode of a vehicle (300), wherein the method comprises the following method steps:
- in the automatic driving mode of the vehicle (300) detecting (110) a signal for switching over into the manual driving mode of the vehicle (300), and
- initiating (120) the manual driving mode depending on the detected signal for switching over into the manual driving mode of the vehicle (300), and
- in the manual driving mode of the vehicle continuously determining (170) an optimal trajectory (340) of the vehicle (300) depending on the switchover into the manual driving mode of the vehicle (300), and
- in the manual driving mode of the vehicle (300) continuously determining (180) a manually driven trajectory (330) of the vehicle, and
- continuously comparing (230) the determined, manually driven trajectory (330) of the vehicle (300) with the determined, optimal trajectory (340), and
- continuously determining a deviation (350a, 350b) of the determined, manually driven trajectory (330) from the determined, optimal trajectory (340) depending on the performed comparison of the determined, manually driven trajectory (330) of the vehicle with the determined, optimal trajectory (340), and
- switching over (260) into the automatic driving mode of the vehicle (300), or
- ending (280) the continuous determination of the manually driven trajectory (330) and the continuous determination of the optimal trajectory (340) of the vehicle (300) in the manual driving mode
depending on the determined deviation (350a, 350b), wherein the continuous determination of the manually driven trajectory and the continuous determination of the optimal trajectory of the vehicle (300) in the manual driving mode are ended (280) if the determined deviation (350a, 350b) remains below a defined threshold value (250),
**characterized in that** the defined threshold value (250) is divided into a first defined threshold value (245) and a second defined threshold value (255), wherein the second defined threshold value (255) is greater than the first defined threshold value (245), wherein depending on a comparison of the determined deviation (350a, 350b) with the first defined threshold value (245) and the second defined threshold value (245)
- a switchover is made (260) into the automatic driving mode of the vehicle or
- the continuous determination of the manually driven trajectory (330) and the continuous determination of the optimal trajectory (340) of the vehicle (300) in the manual driving mode are ended (260) or
- the continuous determination of the manually driven trajectory (330) and the continuous determination of the optimal trajectory (340) of the vehicle (300) in the manual driving mode are continued.

2. Method according to Claim 1, **characterized in that** the method comprises the following additional method steps:
- detecting (130) an environment of the vehicle (300) depending on the switchover into the manual driving mode of the vehicle (300), and
- continuously determining (200) a safety zone of the determined optimal trajectory (340) of the vehicle (300) in the manual driving mode depending on the detected environment of the vehicle, and
- continuously comparing (240) the determined, manually driven trajectory (330) with the determined safety zone of the determined optimal trajectory (340) of the vehicle (300), and
- switching over (260) into the automatic driving mode of the vehicle (300) or
- ending (280) the continuous determination (180) of the manually driven trajectory (330) and the continuous determination (170) of the optimal trajectory (340) of the vehicle (300) in the manual driving mode additionally depending on the comparison (240) of the manually driven trajectory (330) with the determined safety zone.

3. Method according to Claim 2, **characterized in that** the safety zone is determined depending on other road users in the environment of the vehicle (300) and/or depending on a detected roadway boundary (310).

4. Method according to either of Claims 2 and 3, **characterized in that** the safety zone is a channel of movement (325) of the vehicle (300), wherein the channel of movement (325) surrounds the determined, optimal trajectory (340).

5. Method according to Claim 1, **characterized in that** the continuous determination of the manually driven trajectory and the continuous determination of the optimal trajectory of the vehicle (300) in the manual driving mode are ended if the determined deviation (350a, 350b) additionally remains below the defined threshold value (250) for a defined period of time.

6. Method according to Claim 5, **characterized in that** the defined threshold value (250) and/or the defined period of time are/is adapted depending on the following method steps:
- continuously determining (190) a driving situation of the vehicle (300) in the manual driving mode depending on the manually driven trajectory (330) of the vehicle (300) .

7. Method according to either of Claims 5 and 6, wherein the defined time period and/or the defined threshold value (250) are/is displayed to the driver of the vehicle (300) in the manual driving mode.

8. Method according to one of Claims 5 to 7, **characterized in that** the defined time period and/or the defined threshold value (250) are/is adapted depending on a state of the driver detected (160) in the automatic driving mode of the vehicle (300), in particular a detected physical state of the driver.

9. Computer unit (70), designed for executing a method according to one of Claims 1 to 8, wherein the computer unit (70) is designed
- in an automatic driving mode of the vehicle (300) to receive a signal for switching over into the manual driving mode of the vehicle (300), and
- to initiate the manual driving mode depending on the received signal for switching over into the manual driving mode of the vehicle (300), and
- in the manual driving mode of the vehicle (300) to continuously determine an optimal trajectory (340) of the vehicle (300) depending on the switchover into the manual driving mode of the vehicle (300), and
- in the manual driving mode of the vehicle (300) to continuously determine a manually driven trajectory (330) of the vehicle (340), and
- to continuously compare the determined, manually driven trajectory (330) of the vehicle (340) with the determined, optimal trajectory (340), and
- depending on the performed comparison of the determined, manually driven trajectory (330) of the vehicle (300) with the determined, optimal trajectory (340) to continuously determine a deviation (350a, 350b) of the determined, manually driven trajectory (330) from the determined, optimal trajectory (340), and
depending on the determined deviation (350a, 350b)
- to switch over into the automatic driving mode of the vehicle (300) or
- to end the continuous determination of the manually driven trajectory (330) and the continuous determination of the optimal trajectory (340) of the vehicle (300) in the manual driving mode,
wherein the computer unit is designed to end (280) the continuous determination of the manually driven trajectory and the continuous determination of the optimal trajectory of the vehicle (300) in the manual driving mode if the determined deviation (350a, 350b) remains below a defined threshold value (250), **characterized in that**
the defined threshold value (250) is divided into a first defined threshold value (245) and a second defined threshold value (255), wherein the second defined threshold value (255) is greater than the first defined threshold value (245), wherein the computer unit is designed, depending on a comparison of the determined deviation (350a, 350b) with the first defined threshold value (245) and the second defined threshold value (245),
- to switch over (260) into the automatic driving mode of the vehicle or
- to end (260) the continuous determination of the manually driven trajectory (330) and the continuous determination of the optimal trajectory (340) of the vehicle (300) in the manual driving mode or
- to continue the continuous determination of the manually driven trajectory (330) and the continuous determination of the optimal trajectory (340) of the vehicle (300) in the manual driving mode.

10. Computer unit (70) according to Claim 9, **characterized in that** the computer unit (70) is additionally designed
- to receive environment data of the vehicle (300) depending on the switchover into the manual driving mode of the vehicle (300), and
- to continuously determine a safety zone of the determined optimal trajectory (340) of the vehicle (300) in the manual driving mode depending on the detected environment data of the vehicle (300), and
- to continuously compare the determined deviation (350a, 350b) of the determined, manually driven trajectory (330) from the determined, optimal trajectory (340) with the determined safety zone of the determined optimal trajectory (340) of the vehicle (300), and in addition to the comparison with the defined threshold values, depending on the comparison of the determined deviation (350a, 350b) of the determined, manually driven trajectory (330) from the determined, optimal trajectory (340) with the determined safety zone,
- to switch over into the automatic driving mode of the vehicle (300) or
- to end the continuous determination of the manually driven trajectory (330) and the continuous determination of the optimal trajectory (340) of the vehicle (300) in the manual driving mode.

11. Vehicle (300) having
- a computer unit (70) according to Claim 9 or 10, and
- at least one signal unit (10), designed for generating a signal for switching over into a manual driving mode of the vehicle (300).

12. Vehicle (300) according to Claim 11 if Claim 11 is dependent on Claim 9, additionally having
- at least a first sensor (20), designed for detecting environment data of the vehicle (300) depending on the switchover into the manual driving mode of the vehicle (300),
wherein the computer unit (70) is designed to receive the environment data detected by means of the at least one first sensor (20) and to continuously determine a safety zone of the determined optimal trajectory (340) of the vehicle (300) in the manual driving mode depending on the received environment data of the vehicle (300), and to continuously compare the determined deviation (350a, 350b) of the determined, manually driven trajectory (330) from the determined, optimal trajectory (340) with a determined right-hand side safety zone (310) and lefthand side safety zone (320) of the determined optimal trajectory (340) of the vehicle (300), and in addition to the comparison with the defined threshold values, depending on the comparison of the determined deviation (350a, 350b) of the determined, manually driven trajectory (330) from the determined, optimal trajectory (340) with the determined safety zone,
- to switch over into the automatic driving mode of the vehicle (300) or
- to end the continuous determination of the manually driven trajectory (330) and the continuous determination of the optimal trajectory (340) of the vehicle (300) in the manual driving mode.

13. Vehicle (300) according to either of Claims 11 and 12, additionally having
- at least a second sensor (60), designed for detecting a state of the driver of the vehicle (300), in particular a detected physical state of the driver,
wherein the computer unit (70) is designed to end the continuous determination of the manually driven trajectory (330) and the continuous determination of the optimal trajectory (340) of the vehicle (300) in the manual driving mode if the determined deviation (350a, 350b) remains below a defined threshold value (250) for a defined period of time, and to adapt the defined period of time and/or the defined threshold value (250) depending on the state of the driver detected by means of the at least one second sensor (60), in particular a detected physical state of the driver.

## Revendications

1. Procédé permettant de commander une commutation entre un mode de conduite automatique et un mode de conduite manuel d'un véhicule (300), le procédé présentant les étapes de procédé suivantes consistant à :
- dans le mode de conduite automatique du véhicule (300), détecter (110) un signal de commutation sur le mode de conduite manuel du véhicule (300), et
- initier (120) le mode de conduite manuel en fonction du signal détecté de commutation sur le mode de conduite manuel du véhicule (300), et
- dans le mode de conduite manuel du véhicule, déterminer en continu (170) une trajectoire optimale (340) du véhicule (300) en fonction de la commutation sur le mode de conduite manuel du véhicule (300), et
- dans le mode de conduite manuel du véhicule (300), déterminer en continu (180) une trajectoire parcourue manuellement (330) du véhicule, et
- comparer en continu (230) la trajectoire parcourue manuellement (330) déterminée du véhicule (300) avec la trajectoire optimale (340) déterminée, et
- déterminer en continu un écart (350a, 350b) de la trajectoire parcourue manuellement (330) déterminée par rapport à la trajectoire optimale (340) déterminée en fonction de la comparaison effectuée de la trajectoire parcourue manuellement (330) déterminée du véhicule avec la trajectoire optimale (340) déterminée, et
- commuter (260) sur le mode de conduite automatique du véhicule (300) ou
- terminer (280) la détermination continue de la trajectoire parcourue manuellement (330) et la détermination continue de la trajectoire optimale (340) du véhicule (300) dans le mode de conduite manuel
en fonction de l'écart (350a, 350b) déterminé, dans lequel la détermination continue de la trajectoire parcourue manuellement et la détermination continue de la trajectoire optimale du véhicule (300) dans le mode de conduite manuel sont terminées (280) si l'écart (350a, 350b) déterminé reste inférieur à une valeur seuil définie (250),
**caractérisé en ce que** la valeur seuil définie (250) est divisée en une première valeur seuil définie (245) et une deuxième valeur seuil définie (255), dans lequel la deuxième valeur seuil définie (255) est supérieure à la première valeur seuil définie (245), dans lequel en fonction d'une comparaison de l'écart (350a, 350b) déterminé avec la première valeur seuil définie (245) et la deuxième valeur seuil définie (245)
- on commute (260) sur le mode de conduite automatique du véhicule, ou
- la détermination continue de la trajectoire parcourue manuellement (330) et la détermination continue de la trajectoire optimale (340) du véhicule (300) se terminent (260) dans le mode de conduite manuel, ou
- la détermination continue de la trajectoire parcourue manuellement (330) et la détermination continue de la trajectoire optimale (340) du véhicule (300) se poursuivent dans le mode de conduite manuel.

2. Procédé selon la revendication 1, **caractérisé en ce que** le procédé présente les étapes de procédé supplémentaires suivantes consistant à :
- détecter (130) un entourage du véhicule (300) en fonction de la commutation sur le mode de conduite manuel du véhicule (300), et
- déterminer en continu (200) une zone de sécurité de la trajectoire optimale (340) déterminée du véhicule (300) dans le mode de conduite manuel en fonction de l'entourage détecté du véhicule, et
- comparer en continu (240) la trajectoire parcourue manuellement (330) déterminée avec la zone de sécurité déterminée de la trajectoire optimale (340) déterminée du véhicule (300), et
- commuter (260) sur le mode de conduite automatique du véhicule (300), ou
- terminer (280) la détermination continue (180) de la trajectoire parcourue manuellement (330) et la détermination continue (170) de la trajectoire optimale (340) du véhicule (300) dans le mode de conduite manuel
en plus en fonction de la comparaison (240) de la trajectoire parcourue manuellement (330) avec la zone de sécurité déterminée.

3. Procédé selon la revendication 2, **caractérisé en ce que** la zone de sécurité est déterminée en fonction d'autres usagers de la route dans l'entourage du véhicule (300) et/ou en fonction d'une limite de chaussée (310) détectée.

4. Procédé selon l'une quelconque des revendications 2 ou 3, **caractérisé en ce que** la zone de sécurité est un couloir de déplacement (325) du véhicule (300), le couloir de déplacement (325) entourant la trajectoire optimale (340) déterminée.

5. Procédé selon la revendication 1, **caractérisé en ce que** la détermination continue de la trajectoire parcourue manuellement et la détermination continue de la trajectoire optimale du véhicule (300) se terminent dans le mode de conduite manuel si l'écart (350a, 350b) déterminé reste en plus pendant une durée définie au-dessous de la valeur seuil définie (250).

6. Procédé selon la revendication 5, **caractérisé en ce que** la valeur seuil définie (250) et/ou la durée définie sont adaptées en fonction de l'étape de procédé suivante consistant à :
- déterminer en continu (190) une situation de conduite du véhicule (300) dans le mode de conduite manuel en fonction de la trajectoire parcourue manuellement (330) du véhicule (300).

7. Procédé selon l'une quelconque des revendications 5 ou 6, dans lequel la durée définie et/ou la valeur seuil définie (250) sont affichées pour le conducteur du véhicule (300) dans le mode de conduite manuel.

8. Procédé selon l'une quelconque des revendications 5 à 7, **caractérisé en ce que** la durée définie et/ou la valeur seuil définie (250) sont adaptées en fonction d'un état du conducteur, détecté (160) dans le mode de conduite automatique du véhicule (300), en particulier d'un état physique détecté du conducteur.

9. Unité de calcul (70), réalisée pour effectuer un procédé selon l'une quelconque des revendications 1 à 8, dans laquelle l'unité de calcul (70) est réalisée
- dans un mode de conduite automatique du véhicule (300), pour recevoir un signal de commutation sur le mode de conduite manuel du véhicule (300), et
- en fonction du signal reçu de commutation sur le mode de conduite manuel du véhicule (300), pour initier le mode de conduite manuel, et
- dans le mode de conduite manuel du véhicule (300), en fonction de la commutation sur le mode de conduite manuel du véhicule (300), pour déterminer en continu une trajectoire optimale (340) du véhicule (300), et
- dans le mode de conduite manuel du véhicule (300), pour déterminer en continu une trajectoire parcourue manuellement (330) du véhicule (340), et
- pour comparer en continu la trajectoire parcourue manuellement (330) déterminée du véhicule (340) avec la trajectoire optimale (340) déterminée, et
- en fonction de la comparaison effectuée de la trajectoire parcourue manuellement (330) déterminée du véhicule (300) avec la trajectoire optimale (340) déterminée, pour déterminer en continu un écart (350a, 350b) de la trajectoire parcourue manuellement (330) déterminée par rapport à la trajectoire optimale (340) déterminée, et
en fonction de l'écart (350a, 350b) déterminé,
- pour commuter sur le mode de conduite automatique du véhicule (300), ou
- pour terminer la détermination en continu de la trajectoire parcourue manuellement (330) et la détermination continue de la trajectoire optimale (340) du véhicule (300) dans le mode de conduite manuel,
dans laquelle l'unité de calcul est réalisée pour terminer (280) la détermination continue de la trajectoire parcourue manuellement et la détermination continue de la trajectoire optimale du véhicule (300) dans le mode de conduite manuel si l'écart (350a, 350b) déterminé reste au-dessous d'une valeur seuil définie (250),
**caractérisée en ce que** la valeur seuil définie (250) est divisée en une première valeur seuil définie (245) et une deuxième valeur seuil définie (255), la deuxième valeur seuil définie (255) étant supérieure à la première valeur seuil définie (245), dans laquelle l'unité de calcul est réalisée, en fonction d'une comparaison de l'écart (350a, 350b) déterminé par rapport à la première valeur seuil définie (245) et à la deuxième valeur seuil définie (245),
- pour commuter (260) sur le mode de conduite automatique du véhicule, ou
- pour terminer (260) la détermination continue de la trajectoire parcourue manuellement (330) et la détermination continue de la trajectoire optimale (340) du véhicule (300) dans le mode de conduite manuel, ou
- pour poursuivre la détermination continue de la trajectoire parcourue manuellement (330) et la détermination continue de la trajectoire optimale (340) du véhicule (300) dans le mode de conduite manuel.

10. Unité de calcul (70) selon la revendication 9, **caractérisée en ce que** l'unité de calcul (70) est en outre réalisée pour
- recevoir des données d'entourage du véhicule (300) en fonction de la commutation sur le mode de conduite manuel du véhicule (300), et
- déterminer en continu une zone de sécurité de la trajectoire optimale (340) déterminée du véhicule (300) dans le mode de conduite manuel en fonction des données d'entourage détectées du véhicule (300), et
- comparer en continu l'écart (350a, 350b) déterminé de la trajectoire parcourue manuellement (330) déterminée par rapport à la trajectoire optimale (340) déterminée avec la zone de sécurité déterminée de la trajectoire optimale (340) déterminée du véhicule (300), et en plus de la comparaison avec les valeurs seuil définies en fonction de la comparaison de l'écart (350a, 350b) déterminé de la trajectoire parcourue manuellement (330) déterminée par rapport à la trajectoire optimale (340) déterminée avec la zone de sécurité déterminée,
- commuter sur le mode de conduite automatique du véhicule (300), ou
- terminer la détermination continue de la trajectoire parcourue manuellement (330) et la détermination continue de la trajectoire optimale (340) du véhicule (300) dans le mode de conduite manuel.

11. Véhicule (300), comprenant
- une unité de calcul (70) selon la revendication 9 ou 10, et
- au moins une unité de signal (10) réalisée pour générer un signal de commutation sur un mode de conduite manuel du véhicule (300).

12. Véhicule (300) selon la revendication 11, lorsque la revendication 11 dépend de la revendication 9, présentant en outre
- au moins un premier capteur (20) réalisé pour détecter des données d'entourage du véhicule (300) en fonction de la commutation sur le mode de conduite manuel du véhicule (300),
dans lequel l'unité de calcul (70) est réalisée pour recevoir les données d'entourage détectées au moyen du au moins un premier capteur (20), et en fonction des données d'entourage reçues du véhicule (300), pour déterminer en continu une zone de sécurité de la trajectoire optimale (340) déterminée du véhicule (300) dans le mode de conduite manuel, et pour comparer en continu l'écart (350a, 350b) déterminé de la trajectoire parcourue manuellement (330) déterminée par rapport à la trajectoire optimale (340) déterminée avec une zone de sécurité déterminée droite (310) et gauche (320) de la trajectoire optimale (340) déterminée du véhicule (300), et en plus de la comparaison avec les valeurs seuils définies, en fonction de la comparaison de l'écart (350a, 350b) déterminé de la trajectoire parcourue manuellement (330) déterminée par rapport à la trajectoire optimale (340) déterminée avec la zone de sécurité déterminée, pour
- commuter sur le mode de conduite automatique du véhicule (300), ou
- terminer la détermination continue de la trajectoire parcourue manuellement (330) et la détermination continue de la trajectoire optimale (340) du véhicule (300) dans le mode de conduite manuel.

13. Véhicule (300) selon l'une quelconque des revendications 11 ou 12, présentant en outre
- au moins un deuxième capteur (60) réalisé pour détecter un état du conducteur du véhicule (300), en particulier un état physique détecté du conducteur,
dans lequel l'unité de calcul (70) est réalisée pour terminer la détermination continue de la trajectoire parcourue manuellement (330) et la détermination continue de la trajectoire optimale (340) du véhicule (300) dans le mode de conduite manuel si l'écart (350a, 350b) déterminé reste pendant une durée définie au-dessous d'une valeur seuil définie (250), et pour adapter la durée définie et/ou la valeur seuil définie (250) en fonction de l'état du conducteur détecté au moyen du au moins un deuxième capteur (60), en particulier d'un état physique détecté du conducteur.
